# EUROPÄISCHE PATENTSCHRIFT

(11) **EP 3 931 006 B1**
(45) Veröffentlichungstag und Bekanntmachung des Hinweises auf die Patenterteilung: **13.08.2025**
(21) Anmeldenummer: 20708035.9
(22) Anmeldetag: 24.02.2020
(51) Int. Cl.: B42D 25/455, B42D 25/46, B42D 25/47, B42D 25/324, B42D 25/378

(54) **TRANSFERVORRICHTUNG UND VERFAHREN IN EINER TRANSFERVORRICHTUNG FÜR OPTISCHE SICHERHEITSELEMENTE**
TRANSFER DEVICE AND METHOD IN A TRANSFER DEVICE FOR OPTICAL SECURITY ELEMENTS
DISPOSITIF DE TRANSFERT ET PROCÉDÉ DANS UN DISPOSITIF DE TRANSFERT POUR DES ÉLÉMENTS DE SÉCURITÉ OPTIQUES

(30) Priorität: 28.02.2019 DE 102019001422
(43) Veröffentlichungstag der Anmeldung: 05.01.2022
(73) Patentinhaber: Giesecke+Devrient Currency Technology GmbH, 81677 München (DE)
(72) Erfinder: SCHINABECK, Josef, 82467 Garmisch-Partenkirchen (DE); BACHER, Erwin, 83734 Hausham (DE)
(74) Vertreter: Giesecke+Devrient IP
(86) Internationale Anmeldenummer: PCT/EP2020/025086
(87) Internationale Veröffentlichungsnummer: WO 2020/173603

(56) Entgegenhaltungen:
- WO-A1-2016/188624
- DE-A1- 102006 037 417

## Beschreibung

Die Erfindung betrifft eine Transfervorrichtung für optische Sicherheitselemente, welche auf einem Transfersubstrat bereitgestellte Transferelemente vom Transfersubstrat ablöst und mit einem Zielsubstrat permanent verbindet.

Datenträger, wie Wert- oder Ausweisdokumente, aber auch andere Wertgegenstände, wie etwa Markenartikel, werden zur Absicherung oft mit optischen Sicherheitselementen versehen, die eine visuelle Überprüfung der Echtheit des Datenträgers gestatten und die zugleich als Schutz vor unerlaubter Reproduktion dienen. Optische Sicherheitselemente können beispielsweise in das Substrat des Datenträgers integriert sein (Sicherheitsfaden ...) oder als Transferelement auf das Substrat des Datenträgers aufgebracht werden. Eine permanente Verbindung zwischen Transferelement und Zielsubstrat wird zumeist mittels eines - beispielsweise thermisch - aktivierbaren Klebers erzielt.

Es sind verschiedene Verfahren bekannt, um die optischen Sicherheitselemente vom Transfersubstrat zu lösen und mit dem Zielsubstrat zu verbinden.

In der Regel werden die Transferelemente auf dem Transfersubstrat und das Zielsubstrat in Kontakt gebracht und der Kleber aktiviert, so dass die Transferelemente und das Zielsubstrat sich permanent miteinander verbinden. Beide Substrate werden dabei in der Transfervorrichtung beispielsweise zwischen zwei Rollen (Andruckrolle und Gegendruckrolle) hindurch geführt. Anschließend wird das Transfersubstrat von den Transferelementen abgezogen. In WO2010/031543 A1 wird ein Trägersubstrat mit zwei aufeinander kaschierten Teilschichten für ein solches Verfahren vorgeschlagen.

Wird anstelle von Rollen ein beweglicher Stempel verwendet, so sinkt zunächst die Verarbeitungsgeschwindigkeit der Transfervorrichtung.

In den bekannten, kontinuierlich arbeitenden Transfervorrichtungen musste der Abstand der Transferelemente auf dem Transfersubstrat dem Abstand der Transferelemente auf dem Zielsubstrat entsprechen.

Es wurde bereits vorgeschlagen, die Transferelemente auf dem Trägersubstrat in halbiertem bzw. gedrittelten Abstand hintereinander anzuordnen und das Trägersubstrat dann mehrfach zu verwenden. Eine erste Gruppe der Transferelemente, nur jedes zweite bzw. dritte Transferelement, wird in einem ersten Durchlauf des Transfersubstrates durch die Transfervorrichtung übertragen. In einem zweiten (oder dritten) Durchlauf durch die Transfervorrichtung wird das Transfersubstrat um den halbierten bzw. gedrittelten Abstand versetzt verwendet.

In WO 2016/188624 A1 wird für voneinander beabstandet angeordnete Transferelemente eine Transfervorrichtung vorgeschlagen, in welcher beide Substrate mit voneinander unabhängigen Geschwindigkeiten bewegt werden. Das Transferelement wird mittels einer Ablöse-Einheit, welche die Bewegungsrichtung des Transfersubstrates ändert, vom Transfersubstrat gelöst und mit dem Zielsubstrat in Kontakt gebracht. Der Abstand der Transferelemente auf dem Zielsubstrat kann größer sein als der Abstand der Transferelement auf dem Trägersubstrat.

DE 10 2006 037 417 betrifft eine Vorrichtung zum Aufbringen von selbstklebenden RFID-Etiketten und zeigt den Oberbegriff von Anspruch 1.

Der Erfindung liegt die Aufgabe zugrunde, ein abstandsflexibles aber kostengünstiges Transferverfahren anzugeben.

Diese Aufgabe wird durch die Merkmale des unabhängigen Anspruchs gelöst. Weiterbildungen der Erfindung sind Gegenstand der abhängigen Ansprüche.

In dem Verfahren werden in einer Transfervorrichtung für optische Sicherheitselemente eine Vielzahl von optisch variablen Sicherheitselementen, welche für den Betrachter einen optisch variablen Effekt zeigen, als Transferelemente auf einem Transfersubstrat bereitgestellt. Die Transferelemente sind mit einem ersten Abstand hintereinander auf dem Transfersubstrat angeordnet. Ein Transferelement wird von dem Transfersubstrat abgelöst. Das Zielsubstrat wird mit einer Geschwindigkeit in der Transfervorrichtung bewegt und das Transferelement mit dem bewegten Zielsubstrat permanent verbunden. Auf dem Zielsubstrat sind Transferelemente mit einem zweiten Abstand, der größer als der erste Abstand ist, angeordnet. Vorliegend wird das von dem Transfersubstrat gelöste Transferelement temporär auf einen Transportträger der Transfervorrichtung übertragen. Auf dem Transportträger der Transfervorrichtung wird das Transferelement bereits vor einem Kontakt mit dem Zielsubstrat mit der Geschwindigkeit des Zielsubstrates transportiert. Ein Kleber, welcher die permanente Verbindung herstellt, ist auf der vom Transfersubstrat abgewandten Seite des Transferelementes angeordnet. Der Kleber, welcher die permanente Verbindung herstellt, wird erwärmt.

Die Verarbeitungsgeschwindigkeit der optischen Sicherheitselemente in der Transfervorrichtung kann somit trotz Abstandsänderung weiter erhöht werden. Insbesondere können bei gleichbleibender Positionsgenauigkeit und Verbindungsstabilität höhere Geschwindigkeitsdifferenzen verwendet werden. Auch die mechanische Empfindlichkeit der optischen Sicherheitselemente wird durch die Lösung berücksichtigt.

Das Transfersubstrat kann mit einer ersten Geschwindigkeit bewegt werden, welche von der (zweiten) Geschwindigkeit des Zielsubstrates abweicht. Das Zielsubstrat wird mit einer konstanten Geschwindigkeit bewegt. In bevorzugten Ausgestaltungen werden beide Substrate in der Transfervorrichtung kontinuierlich bewegt. Die Bewegungsgeschwindigkeiten der beiden Substrate sind konstant. In alternativen Ausgestaltungen wird die Geschwindigkeit des Transfersubstrates variiert. Die Geschwindigkeit v1 des Transfersubstrates liegt in einem Bereich v1 = r*v2, mit 0 <= r <=1,1 bzw. 0 < r < 0,95. Die Geschwindigkeit des Transfersubstrates wird zumindest um 10% seiner Maximalgeschwindigkeit, vorzugsweise um mindestens 20%, variiert.

Das Transfersubstrat kann auch als Endlos-Transfersubstrat, insbesondere Endlos-Transferbahn oder Endlos-Transferstreifen, bezeichnet werden. Er wird beispielsweise mit einer Länge von mehreren 100 bis mehreren 10000 Metern bereitgestellt wird. Als Transfersubstrat wird regelmäßig ein Kunststoffsubstrat verwendet. Betrachtet wird vorliegend eine Reihe von longitudinal hintereinander auf dem Transfersubstrat angeordneten Transferelementen (Transferstreifen). Es könnten mehrere solcher Reihen transversal nebeneinander auf dem Transfersubstrat vorliegen (Transferbahn). Bevorzugt umfasst das Transfersubstrat als Endlostransferstreifen jedoch genau eine Reihe von Transferelementen. Das Zielsubstrat kann ebenfalls als Endlossubstrat bezeichnet werden, da es in ähnlich großer Länge (größer als 100 bzw. 5000 Meter, insbesondere zwischen 500 und 25000 m) oder sogar als tatsächlich endlose Bahn bereitgestellt wird. Das Zielsubstrat ist bevorzugt ein mehrschichtiges Substrat, beispielsweise mit mehreren Papier- und/oder Kunststoffteilschichten. Als Zielsubstrat wird regelmäßig eine Wertdokumentenbahn (aus Papier, Kunststoff oder mit einem Hybridaufbau mit Papier- und Kunststoffteilschichten) verwendet.

Die longitudinale Erstreckung des (Transfer- oder Ziel-) Substrates entspricht der Bewegungsrichtung. Im Folgenden ist daher oft implizit eine longitudinaler Wert angegeben, wenn beispielsweise Geschwindigkeits- oder Größenangaben ohne abweichende Richtungsangabe genannt sind.

Die Transferelemente werden bereits voneinander beabstandet bereitgestellt. Auf dem Transfersubstrat sind longitudinal hintereinander die Transferelemente mit einem ersten Abstand zwischen zwei aufeinander folgenden Transferelementen angeordnet. Ein solcher Abstand kann auch als Länge der Lücke zwischen den Transferelementen bezeichnet werden. Der Abstand zwischen den Transferelementen auf dem Transfersubstrat liegt insbesondere im Bereich von 5 bis 99% der Größe des Transferelements (wie immer longitudinal betrachtet).

Vorzugsweise erfolgt eine Änderung einer Geschwindigkeit des gelösten Transferelementes zusammen mit der Änderung des Abstandes in dem Schritt des temporären Übertragens. Alternativ kann nach einer Änderung des Abstandes in dem Schritt des temporären Übertragens die Geschwindigkeit des Transferelements in dem Schritt des Transportierens geändert werden, wobei optional eine weitere Abstandsänderung erfolgt.

Das Transferelement wird vorliegend durch Ändern der lokalen Bewegungsrichtung des Transfersubstrates von dem Transfersubstrat gelöst. Ein Ablöse-Keil, eine Ablöse-Kante oder eine Ablöse-Rolle mit kleinem Radius, kann verwendet werden, um das Ablösen zu erreichen. Dieses Ablösen ist nicht - wie haftungsbestimmte Ablöse-Schritte - darauf angewiesen, dass die Haftung auf der gebenden Instanz kleiner ist als auf der nehmenden Instanz. Vielmehr kann vorliegend die Haftung des Transferelements auf dem Transfersubstrat größer sein als eine temporäre Anhaftung auf dem Transportträger der Vorrichtung. Insbesondere die Geometrie eines Ablöse-Keils kann an das Transferelement und/oder dessen Transfersubstrat angepasst sein. Der Ablöse-Keil wird insbesondere so gewählt, dass das Transferelement in seiner Bewegungsrichtung unverändert bleibt und möglichst wenig verformt wird.

In dem Schritt des permanenten Verbindens ist das Transferelement bevorzugt auf einer Andruckrolle angeordnet. An der Andruckrolle sind für das Zielsubstrat mit Transferelementen bevorzugt drei oder mehr Gegendruckrollen hintereinander angeordnet. Vorzugsweise erwärmt (bzw. (vor)aktiviert) die Andruckrolle (oder die Verbindungseinheit) den Kleber, welcher die permanente Verbindung herstellt, beispielsweise mittels einer zusätzlichen Kleberaktivierungs-Untereinheit, wie Heizeinheit oder Bestrahlungseinheit. Der Kleber wird beispielsweise auf eine Temperatur zwischen 80 bis 200 Grad Celsius erwärmt. Wird der (erwärmte) Kleber erst durch den Druck der Andruckrolle tatsächlich aktiviert, entspricht die Erwärmung einer Voraktivierung.

In besonders bevorzugten Ausgestaltungen wird das Transferelement zum Zeitpunkt des Kontaktes mit dem Zielsubstrat quasiparallel zum Zielsubstrat bewegt. Dies kann insbesondere erreicht werden indem der Radius der Andruckrolle ausreichend groß gewählt wird, insbesondere größer ist als die fünffache, vorzugsweise zehnfache, Größe des Transferelementes.

Die optischen Sicherheitselemente sind bevorzugt optisch variable Sicherheitselemente. Optisch variable Sicherheitselemente zeigen einen optisch variablen Effekt für den Betrachter. Sie wirken aus unterschiedlichen Betrachtungswinkeln oder -seiten unterschiedlich. Nur beispielsweise zeigen sie dem Betrachter betrachtungswinkelabhängig oder seitenabhängig unterschiedliche Motive und/oder unterschiedliche Farbe (Farbwechsel oder Farbkippeffekt) und/oder unterschiedliche Perspektiven (3D-Effekt) und/oder unterschiedliche Positionen (Bewegungseffekte).

Ebenso ist es bevorzugt, dass nach dem temporären Übertragen auf den Transportträger ein zweites temporäres Übertragen des Transferelementes erfolgt. Insbesondere kann das zweite temporäre Übertragen beispielsweise von einer ersten Transportrolle (oder ein Transportband), auf einen weiteren Teil des Transportträgers, beispielsweise eine zweite Transportrolle, oder auf die Andruckrolle erfolgen. Besonders bevorzugt wird beim zweiten temporären Übertragen das Transferelement von einer ersten Transportrolle des Transportträgers mit einem erstem Radius auf eine zweite Transportrolle des Transportträgers (oder die Andruckrolle) mit einem größeren Radius übergeben.

In optimierten Ausgestaltungen kann das Transferelement auf einer Transportrolle des Transportträgers über einen Transportwinkel von weniger als 150 Grad, insbesondere weniger als 120 Grad, weiter vorzugsweise weniger als 90 Grad, transportiert werden. Die relative Anordnung der Ablöse-Einheit, der Transportrolle(n) und der Verbindungs-Einheit zueinander in der Transfervorrichtung wird entsprechend angepasst.

Auf einer Andruckrolle bleibt das Transferelement vorzugsweise über einen Transportwinkel von mehr als 90 Grad, vorzugsweise mehr als 135 Grad, weiter vorzugsweise mehr als 180 Grad angeordnet. Der große Transportwinkel ermöglicht eine stabile Ausbildung der permanenten Verbindung. Wird das Transferelement vor einem Kontakt mit dem Zielsubstrat auf einer Andruckrolle über einen Transportwinkel von mehr als 30 Grad, vorzugsweise mehr als 45 Grad, angeordnet, kann der Kleber bereits vor dem Kontakt des Transferelements mit dem Zielsubstrat aktiviert werden. Nach dem Kontakt mit dem Zielsubstrat bleibt das Transferelement auf der Andruckrolle angeordnet über einen Transportwinkel von mehr als 90 Grad, vorzugsweise mehr als 135 Grad.

Über einen (der genannten) Transportwinkel verteilt sind mehrere Gegendruckrollen, insbesondere mit steigendem Abstand zwischen den Gegendruckrollen, an der Andruckrolle vorgesehen.

Die Transport- und Andruckrollen der vorliegenden Lösung sind kontaktfrei zueinander angeordnet. Zwischen den Rollen ist ein Spalt vorgesehen, der insbesondere an die Höhe des Transferelementes angepasst ist.

Eine Transportrolle der Transportvorrichtung kann in seiner Geschwindigkeit gesteuert werden, insbesondere um die Geschwindigkeit des Zielsubstrates zu erreichen und/oder um eine Verbindungsposition zu wählen oder zu korrigieren. Als Korrektur der Verbindungsposition wird vorliegend betrachtet, eine Änderung der Verbindungsposition um weniger als 1%, vorzugsweise weniger als 0,2%, der Größe (also Länge) des Transferelementes. Eine Wahl der Verbindungsposition wäre dagegen eine Änderung um mehr als 10% der Größe des Transferelementes, insbesondere eine Änderung um 50% bis zu 500% der Größe des Transferelementes, die denkbar - jedoch vorliegend, bei konstantem Abstand der Transferelemente auf dem Zielsubstrat - nicht relevant ist.

Die vorliegende Transfervorrichtung für optische Sicherheitselemente umfasst eine Ablöse-Einheit, einen Transport-Träger und eine Verbindungs-Einheit. Die Ablöse-Einheit kann in einem Ablösebereich der Transfervorrichtung ein optisches Sicherheitselement als Transferelement von einem Transfersubstrat ablösen. Auf dem Transfersubstrat sind optisch variable Sicherheitselemente, welche für den Betrachter einen optisch variablen Effekt zeigen, als Transferelemente mit einem ersten Abstand hintereinander angeordnet. Die Verbindungs-Einheit kann in einem Verbindungsbereich der Transfervorrichtung das Transferelement mit dem Zielsubstrat permanent verbinden. Auf dem Zielsubstrat sind Transferelemente mit einem zweiten Abstand, der größer als der erste Abstand ist, angeordnet. Auf den temporären Transportträger der Transfervorrichtung kann das vom Transfersubstrat gelöste Transferelemente temporär angeordnet werden. Der temporäre Transportträger kann das Transferelement - bereits vor einem Kontakt mit dem Zielsubstrat - mit einer Geschwindigkeit des Zielsubstrates transportieren. Ein Kleber, welcher die permanente Verbindung herstellt, ist auf der vom Transfersubstrat abgewandten Seite des Transferelementes angeordnet. Die Verbindungs-Einheit ist eine Heißpräge-Einheit.

Die Ablöse-Einheit, der Transportträger und/oder die Verbindungs-Einheit sind angepasst, um eines der bereits beschriebenen Verfahren auszuführen.

Der temporäre Transportträger transportiert das Transferelement vom Ablösebereich in den Verbindungsbereich der Vorrichtung. Er kann insbesondere eine oder zwei Transport-Rollen und/oder ein Transportband umfassen. Die Ablöse-Einheit führt eine Richtungsänderung des Transfersubstrates aus, um die Transferelemente abzulösen. Sie kann insbesondere als Ablöse-Keil oder Ablöse-Rolle mit kleinem Radius ausgestaltet sein.

Die Verbindungseinheit umfasst vorzugsweise eine Andruck-Rolle und mehrere Gegendruckrollen sowie optional eine Aktivierungseinheit für den Kleber, die beispielsweise als Heizelement in der Andruck-Rolle integriert sein kann und/oder mittels einer Heizflüssigkeit, wie Öl, oder Heizstrahlung, wir IR-Strahlung, arbeiten kann. Anstelle der Rollen kann alternativ auch eine sich verjüngende Andruck-Spalte eingesetzt werden. Die Verbindungseinheit ist eine Heißpräge-Einheit, der Kleber vorzugsweise ein Heißsiegellack.

Für die Radien der Rollen und die Größe des Transferelemente gelten bevorzugt folgende Beziehungen. Die Radien nehmen vom Ablösebereich zum Verbindungsbereich zu. Der Radius der (ersten und/oder zweiten) Transferrolle r ist kleiner als die dreifache Größe des Transferelementes g, also r < 3*g. Der Radius der Andruckrolle ist dagegen größer als die fünffache Größe des Transferelementes, also r >5*g. Insbesondere gilt r1 < r2 << r3 für die drei Rollen.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine Transfervorrichtung gemäß der vorliegenden Lösung im Querschnitt;
- Fig. 2: in Aufsicht ein herkömmliches Transfersubstrat mit drei Reihen von weit beabstandeten Transferelementen;
- Fig. 3: in Aufsicht ein Transfersubstrat mit drei Reihen enger zueinander angeordneter, beabstandeter Transferelemente;
- Fig. 4: im Querschnitt Teilschichten des Transferelementes und des Transfersubstrates;
- Fig. 5: eine bevorzugte relative Anordnung der Untereinheiten der Transfervorrichtung aus Figur 1 unter Kennzeichnung der Transportwinkel;
- Fig. 6: ein alternative Ausgestaltung einer Transfervorrichtung mit zwischengeschalteter Transporteinrichtung; und
- Fig. 7: eine nicht gemäß der vorliegenden Erfindung ausgestaltete Transfervorrichtung mit spätem Kleberauftrag.

Beansprucht wird ein Verfahren in einer Transfervorrichtung. Die Transfervorrichtung selbst wird nicht beansprucht, erleichtert aber das Verständnis der Erfindung.

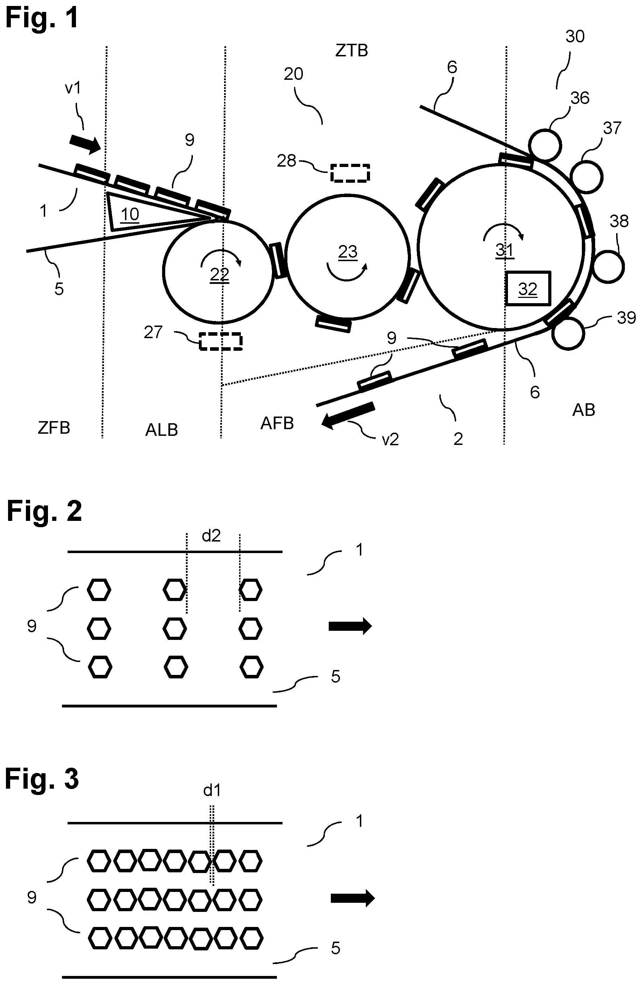

Die Figuren 2 bzw. 3 illustrieren Anordnungen von Transferelementen für Transfervorrichtungen ohne bzw. mit Abstandsänderung der Transferelemente in der Transfervorrichtung respektive.

Ein Transfersubstrat mit Transferelementen 1 umfasst das Transfersubstrat 5 sowie eine Vielzahl von Transferelementen 9, die auf dem Transfersubstrat 5 longitudinal hintereinander angeordnet sind. Die Länge des Transfersubstrates bzw. die entsprechende Bewegungsrichtung in der Transfervorrichtung wird durch den Pfeil illustriert. Dargestellt sind jeweils 3 Reihen von transversal nebeneinander liegenden Reihen von Transferelementen 9.

Für eine Transfervorrichtung ohne Abstandsänderung muss, wie in Fig. 2 dargestellt, der Abstand d2 zwischen den Transferelementen 9 dem späteren Abstand d2 auf dem Zielsubstrat entsprechen. Für eine Transfervorrichtung mit Abstandsänderung kann, wie in Fig. 3 dargestellt, der Abstand d1 zwischen den Transferelementen 9 wesentlich kleiner als der spätere Abstand d2 auf dem Zielsubstrat sein.

Die Größe g (bzw. Länge) des Transferelementes wird zwischen 0,5 cm und 10 cm, bevorzugt zwischen 1 bis 4 cm, liegen. Eine Höhe h des Transferelementes wird (unabhängig von der Größe) im Bereich von 10 µm bis 250 µm, vorzugsweise von 20 bis 100 µm, liegen. Der Abstand d1 wird kleiner als die Größe eines Transferelementes sein, jedoch größer als 1 mm, vorzugsweise größer als 2 mm, besonders bevorzugt zwischen 5 bis 20 mm, sein. Ein Abstand d2 auf dem Zielsubstrat liegt dagegen im Bereich von mehreren cm, insbesondere von 4 bis 25 cm, vorzugsweise zwischen 5 und 10 cm. Die mögliche Materialeinsparung an Transfersubstrat ist also erheblich.

Fig. 1 zeigt eine Transfervorrichtung 10, 20, 30, welche eine Ablöse-Einheit 10, eine Zwischentransport-Einheit 20 und eine Verbindungseinheit 30 umfasst.

Das longitudinale Transfersubstrat mit Transferelementen 1, welches das Transfersubstrat 5 und die Transferelemente 9 umfasst, wird der Transfervorrichtung in einem Zuführbereich ZFB zugeführt. Die Transferelemente 9 sind - wie in Fig. 3 dargestellt - in einem Abstand d1 hintereinander auf dem Transfersubstrat 5 angeordnet und werden mit der Geschwindigkeit v1 des Transfersubstrates mit Transferelementen 1 der Transfervorrichtung zugeführt.

In einer ersten, bevorzugten Ausgestaltung ist die Geschwindigkeit v1 konstant (und kleiner als die Geschwindigkeit des Zielsubstrates).

In einem Ablösebereich ALB löst ein Ablöse-Keil als Ablöse-Einheit 10 die Transferelemente 9 von dem Transfersubstrat 5. Das Ablösen wird durch eine Richtungsänderung des Transfersubstrates 5 am Ablösekeil 10 bewirkt.

In dem Zwischentransportbereich ZTB wird das Transferelement von dem Ablösebereich ALB in den Applikations- oder Verbindungsbereich AB transportiert. Die Zwischentransport-Einheit 20 umfasst eine erste Zwischentransportrolle 22 und eine zweite Zwischentransportrolle 23. Das abgelöste Transferelement 9 wird temporär auf die erste Zwischentransportrolle 22 der Zwischentransport-Einheit 20 übertragen. Die erste Zwischentransportrolle 22 dreht sich mit einer Geschwindigkeit (an ihrem Außenumfang), welche größer ist als die Geschwindigkeit v1 des Transfersubstrates 5. Im Beispiel aus Figur 1 bewegt sich (die Oberfläche der Zwischentransportrolle 22 und somit) das Transferelement 9 auf der der Zwischentransportrolle 22 mit der gleichen Geschwindigkeit v2 wie das Zielsubstrat 6. Die Geschwindigkeit des Zielsubstrates wird im Bereich von 60 bis 120 m/min liegen. Bereits nach dem Übertragen auf die Zwischentransportrolle 22 haben die Transferelemente 9 - auf der Zwischentransportrolle 22 oder innerhalb der Zwischentransport-Einheit 20 - den größeren, späteren Abstand d2 für das permanente Verbinden mit dem Zielsubstrat 6 und bevorzugt ebenfalls bereits die gleiche Geschwindigkeit v2.

Von der ersten Zwischentransportrolle 22 wird das Transferelement 9 weiter auf die zweite (optionale) Zwischentransportrolle 23 übertragen. Von der Zwischentransporteinheit 20, hier der zweiten Zwischentransportrolle 23, wird das Transferelement 9 an die Verbindungseinheit 30, nämlich auf dessen Andruckrolle 31, übertragen.

Erst im Verbindungsbereich AB kommt das auf der Andruckrolle 31 angeordnete Transferelement 9 erstmals in Kontakt mit dem Zielsubstrat 6. Die Verbindungseinheit 30 umfasst die Andruckrolle 31, eine Heizeinheit 32 sowie mehrere, hier vier, Gegendruckrollen 36 bis 39. Das Zielsubstrat 6 wird mit der Geschwindigkeit v2 in die Verbindungseinheit also zwischen die Rollen 31, 36-39 bewegt. Die Andruckrolle transportiert das Transferelement 9 bis zum Zielsubstrat 6. Durch die Heizeinheit 32, die Teil der dann beheizten Andruckrolle 31 sein kann, wird bereits beim Transport eine Kleber aktiviert. Das Transferelement 9 wird dann durch die Andruckrolle 31 auf das Zielsubstrat gedrückt. Die Gegenrolle(n) 36 -39 erzeugen einen Gegendruck für die Andruck-Rolle 31.

Die vorliegende Transfervorrichtung erlaubt es - im Rahmen der vorhandenen Produktionstoleranzen - höhere Geschwindigkeiten, insbesondere höhere Geschwindigkeitsänderungen einzusetzen, als es mit der Lösung gemäß WO 2016/188624 A1 möglich ist.

Das Zielsubstrat mit Transferelementen 2 wird im Abführbereich AFB mit seiner Geschwindigkeit v2 aus der Transfervorrichtung abgeführt/bewegt. Die Transferelemente 9 sind auf dem Zielsubstrat 6, wie bereits in der Zwischentransport-Einheit 20, mit dem zweiten Abstand d2 voneinander beabstandet angeordnet.

Durch den Kleber, der vorzugsweise ein Heißsiegellack ist, wird das Transferelement 9 permanent mit dem Zielsubstrat 6 verbunden. In der Regel ist der Kleber bereits Teil des auf dem Transfersubstrates 5 bereitgestellten Transferelementes 9. Der Kleber wird üblicherweise auf der vom Transfersubstrat abgewandten Seite des Transferelementes angeordnet. Eine Funktion der zweiten Zwischenrolle 23 ist es, das Transferelement umzudrehen. In dem in Fig. 1 dargestellten Beispiel wird die dunkler dargestellte Seite des Transferelementes 9, also beispielsweise der Kleber, mit dem Zielsubstrat in Kontakt gebracht. Für Transferelemente 9, deren Kleberteilschicht auf der zum Transfersubstrat gewandten Seite liegt, wäre die zweite Zwischenrolle 23 insofern nicht nötig. In bekannten aber vorliegend weniger relevanten Alternativen wird der Kleber erst in der Verbindungseinheit 30 aufgebracht (insbesondere entweder auf das Zielsubstrat 6 oder auf das Transferelement 9).

Wie in Fig. 1 durch Drehrichtungspfeile angedeutet, drehen sich benachbarte der Rollen 22, 23, 31 jeweils gegengleich. Die Rollen 22, 23, 31 berühren einander nicht, sondern sind mit einem - vorzugsweise einstellbaren - Übergabespalt zueinander angeordnet. Die Breite des Übergabespaltes ist abhängig von dem Transferelement, insbesondere von dessen Höhe. Die Rollen können als Saug- und/ oder Blaszylinder ausgeführt werden. Mittels Unterdruck (Saugen) und/oder Überdruck (Blasen) kann die Übergabe der Transferelemente unterstützt werden. Der Zylinder bzw. die Rolle saugt beispielsweise an einer (mehreren) bestimmten Position ein (mehrere) Transferelement(e) mit Unterdruck an. Der Zylinder bzw. die Rolle kann durch Blasen oder fehlendes Saugen an einer (anderen) Position - oder nach einem Drehwinkel an der Position des zuvor angesaugten Transferelements - ein Transferelement abgeben. Wie in Fig. 1 angedeutet weisen die Rollen 22,23 und 31 ansteigende Radien auf, r22 > r23 >> r31. Die Radien r22 und r23 der Zwischentransportrollen sind ausreichend klein, um ein Ablösen des Transferelements im jeweiligen Übergabespalt zu unterstützen. Die Anhaftung des Transferelements 9 an der übernehmenden Rolle 23, 31 muss somit nicht größer sein als an der übergebenden Rolle 22, 23.

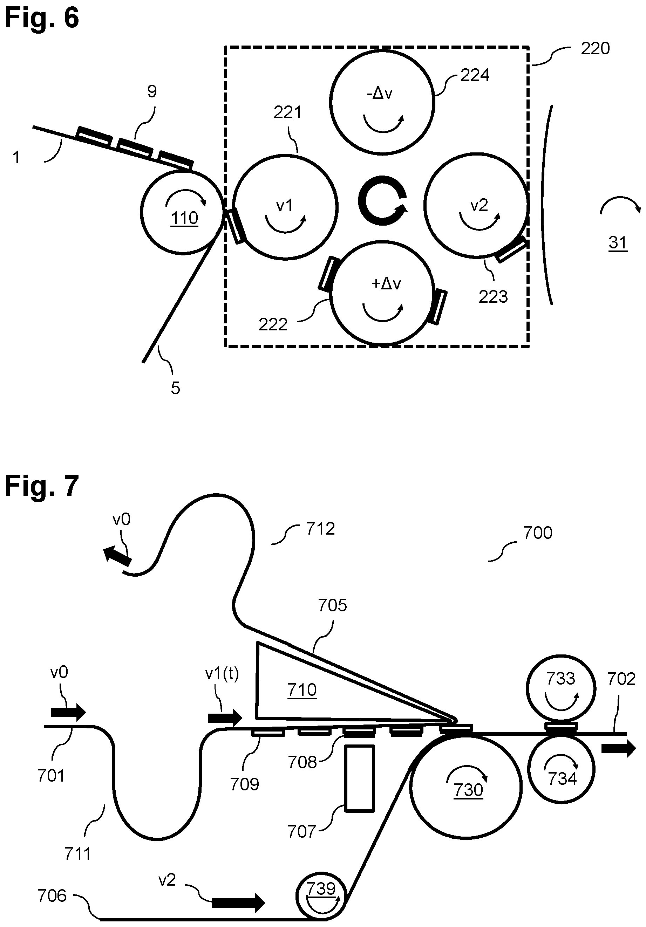

Ein Radius r31 der Andruckrolle 31 ist wesentlich größer als der Radius der ersten und/oder zweiten Zwischentransportrollen 22,23 gewählt (das relative Verhältnis ist in Fig. 6 besser angedeutet). Der große Radius der Andruckrolle 31 bewirkt, dass das auf der Andruckrolle 31 angeordnete Transferelement 9 beim ersten Kontakt mit dem Zielsubstrat nicht nur im Betrag v2 der Geschwindigkeit, sondern auch in der Richtung seiner Bewegung der Bewegungsrichtung des Zielsubstrates 6 entspricht. Der Radius r31 der Andruckrolle 31 liegt vorzugsweise im Bereich von 20 bis 70 cm.

Die mehreren Gegendruckrollen 36 bis 39 können in einem gleichmäßigen Abstand hintereinander an der Andruckrolle 31 angeordnet sein. Bevorzugt ist jedoch - wie in Fig. 1 dargestellt - der Abstand zwischen den ersten Gegendruckrollen 36 und 37 kleiner als die weiteren Abstände, beispielsweise zwischen den Gegendruckrollen 37 und 38.

Als nur optionale Einheiten sind Untereinheiten 27, 28 in Fig. 1 angedeutet. Die Untereinheit(en) 27, 28 gewährleisten eine hinreichende temporäre Anhaftung der Transferelemente 9 auf der(n) Zwischentransportrolle(n) 22, 23. Die Untereinheiten 27, 28 können insbesondere Reinigungseinheiten sein, welche beispielsweise mittels eines Luftstromes oder Teilchenstromes die Zwischentransportrollen reinigen. In der Regel reicht die Anhaftung des Transferelements 9 an der (möglichst glatten) Oberfläche der Zwischentransportrolle für den Zwischentransportschritt aus. Nur optional könnten die Untereinheiten 27, 28 die Zwischentransportrollen elektrostatisch aufladen oder fein, insbesondere mit Wasser, bedampfen, um die temporäre Anhaftung zu verstärken. Die Untereinheit(en) 27, 28 können in die Zwischentransportrolle(n) 22, 23 integriert sein.

In einer Variation der beschriebenen Ausgestaltungen wird die Geschwindigkeit v1 des Transfersubstrates gesteuert. Vorzugsweise wird die Geschwindigkeit v1 des Transfersubstrates für jedes Transferelement temporär bis auf die Geschwindigkeit v2 des Zielsubstrates erhöht. Anschließend wird die Geschwindigkeit v1 des Transfersubstrates wieder gesenkt.

Anhand von Figur 1 ebenfalls gut nachvollziehbar sind mehrere weiter Varianten, die jeweils untereinander und zu dem bisher beschriebenen Ausgestaltungen kombinierbar sind. Die Ablöse-Einheit 10 kann ähnlich wie in WO 2016/188624 A1 verwendet werden. Die Transportrichtung v1 des Transfersubstrates kann also umgedreht sein, so dass auf der Unterseite des Transfersubstrates angeordnete Transferelemente der Ablöse-Einheit 10 zugeführt werden. Der Spalt bzw. Abstand zwischen Ablöse-Einheit 10 und Zwischentransportrolle 22 ist entsprechend anzupassen. Unabhängig von der gewählten Zufuhr kann - wie in Fig. 1 durch gedankliches Weglassen der (optionalen) Zwischentransportrollen 22, 23 erkennbar - das Transferelement auch direkt auf die Andruckrolle 31 übertragen werden.

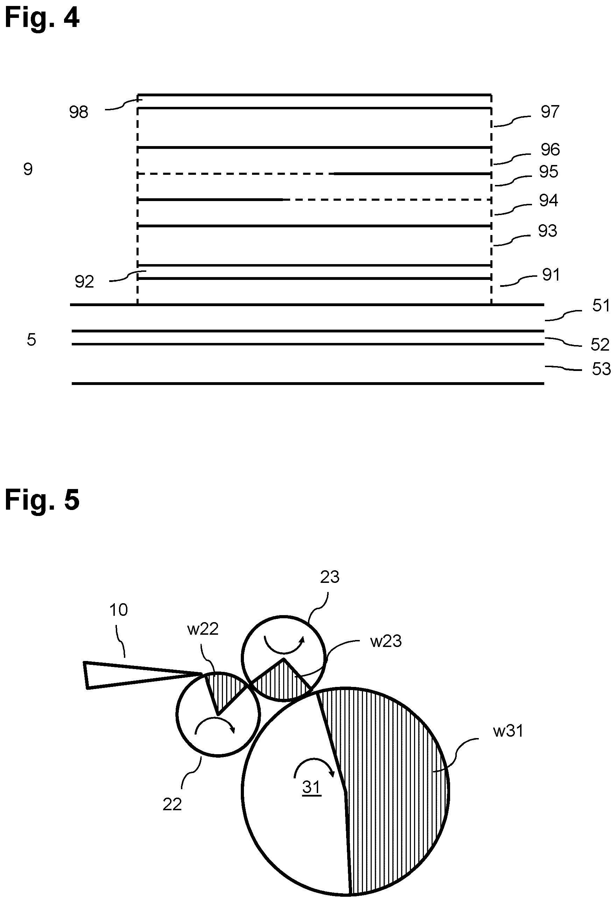

Fig. 4 zeigt beispielhaft einen Querschnitt durch ein Transferelement 9 auf einem Transfersubstrat 5.

Das Transfersubstrat 5 wird bevorzugt durch zwei nur miteinander verbundenen Folienteilschichten 51, 53 gebildet, die insbesondere mit einer Kleberschicht 52 verbunden sind. Die Verwendung derart unabhängiger Teilschichten als Transfersubstrat ist in WO2010/031543 A1 genauer beschrieben.

Das Transferelement 9 ist ein Mehrschichtelement. Die äußere Form des Transferelements kann einem ersten Motiv oder einer einfachen geometrischen Form entsprechen. Folgende teils optionale Teilschichten 91 bis 98 des Transferelements sind in Fig. 4 dargestellt.

Das Transferelement 9 ist bevorzugt ein optisch variables Sicherheitselement, welches ein optisches Sicherheitsmerkmal zur Betrachtung in Aufsicht und/oder Durchsicht umfasst. Das optische Sicherheitsmerkmal wird durch eine oder mehrere Teilschichten 94 bis 96 gebildet. Besonders bevorzugt ist das optische Sicherheitsmerkmal bereichsweise unterschiedlich strukturiert und/oder optisch variabel ausgebildet (veränderter Eindruck für den Betrachter beim Kippen oder Drehen), beispielsweise in Form eines zweiten und/oder dritten Motives. Das optische Sicherheitsmerkmal des Transferelements umfasst eine Prägelackschicht 94, in welche eine optisch wirksame Reliefstruktur eingeprägt ist. Auf der Reliefstruktur ist eine reflektionserhöhende Teilschicht 95, beispielsweise einer Metallisierung oder einer HRI-Schicht, vorgesehen. Diese kann vollflächig, teilflächig mit Aussparungen und/oder teilweise als gerasterte Teilschicht vorliegen. Bevorzugt auf der reflektionserhöhenden Teilschicht 95 liegt eine weiter Farbteilschicht (oder Funktionsteilschicht) 96, welche opak oder transluzent und/oder unterschiedlich farbig (pigmentiert) und/oder optisch variabel (OVI-Pigmente) bzw. aktivierbar (lumineszierend, thermochrom und/oder reversibel bzw. irreversibel änderbar ...) sein kann.

Oberhalb der optisch wirksamen Teilschichten 94 bis 96 ist eine Heißsiegellack-Teilschicht 97 angeordnet, welche die permanente Verbindung zum Zielsubstrat herstellen kann. Um das Ablösen des Transferelementes 9 vom Transfersubstrat 5 zu unterstützen, ist - wie üblich - auf der Oberfläche des Transfersubstrates eine Ablöseteilschicht 91 des Transferelementes 9 angeordnet. Ebenfalls als optionale Teilschicht des Transferelementes 9 bekannt ist eine Folienteilschicht 93, welche als tragende Teilschicht im Transferelement 9 dienen kann.

Die Höhe solcher mehrschichtigen Transferelemente 9 liegt typischerweise zwischen 20 bis 100 µm.

Vorliegend könnte das Transferelement 9 optional eine weitere Zwischenhaftschicht 92, 98 umfassen. Die Zwischenhaftschicht 92, 98 des Transferelements 9 kommt beim Zwischentransport des Transferelements 9 mit der Zwischentransport-Einheit 20 oder der Andruckrolle 31 in Kontakt. Die Zwischenhaftschicht 92, 98 ist angepasst, um eine temporäres Übertragen auf die Zwischentransport-Einheit 20 oder der Andruckrolle 31 zu unterstützen und/oder um nach dem temporären Übertragen ein Ablösen von der Zwischentransport-Einheit 20 oder der Andruckrolle 31 zu unterstützen. Die Zwischenhaftschicht 92, 98 ist insofern vorzugsweise an das Material der entsprechenden Rollen 22, 23, 31 angepasst. Beispielsweise ist die Zwischenhaftschicht 92 vorgesehen, um eine erhöhte temporäre Anhaftung auf der ersten Transportrolle 22 und/oder der Andruckrolle 31 zu gewährleisten. Die Zwischenschicht 92 weist eine bessere temporäre Anhaftung an diesen Rollen 22, 31 auf, als eine Teilschicht 93 bzw. 94 welche im Aufbau des Transferelements auf die Zwischenhaftschicht 92 folgt. Die Zwischenschicht 98 weist eine schlechtere temporäre Anhaftung an einer (zweiten Zwischentransportrolle 23 oder ggf. einer anderen) Oberfläche der Zwischentransport-Einheit 20 auf, als die Kleberteilschicht 97. Die Zwischenschicht 98 ist zudem angepasst, um das permanente Verbinden mit dem Zielsubstrat durch die Kleberteilschicht 97 zu ermöglichen. Die Zwischenhaftschicht 98 ist dünner als die Kleberteilschicht 97, insbesondere gilt für deren Höhen h98*2 <= h97. Die Zwischenhaftschicht 98 kann beispielsweise durch eine - für die Kleberteilschicht vorgesehene oder eine separate - Aktivierung aktiviert werden. Sie kann insbesondere chemisch mit dem Kleber reagieren oder sich umwandeln.

Fig. 5 zeigt schematisch die Rollen 22, 23 und 31 und die Ablöse-Einheit 10 der Transfervorrichtung aus Fig. 1 in einer optimierten relativen Anordnung.

Schraffiert hervorgehoben sind in den Rollen 22, 23 und 31 die jeweiligen Transportwinkel w22, 23 und w31 für das Transferelement auf der Rolle 22, 23 und 31.

Durch die optimierte Anordnung kann der Transportwinkel auf der ersten und/oder der zweiten Zwischentransportrolle 22, 23 auf unter 135 Grad gesenkt werden. Im dargestellten Fall liegt der erste Transportwinkel w22 auf der ersten Zwischentransportrolle 22 sogar unter 90 Grad und zugleich der zweite Transportwinkel unter 120 Grad. Die Summe der Transportwinkel auf den beiden Zwischentransportrollen kann also unter 240 Grad gesenkt werden. Diese Reduktion hat keinen spürbaren Einfluss auf die Verarbeitungsgeschwindigkeit, reduziert jedoch die Anforderungen an die temporäre Anhaftung beim Zwischentransport.

Der Transportwinkel w31 auf der Andruckrolle ist größer als 90 Grad, vorzugsweise größer als 135 oder als 180 Grad. Ein großer Transportwinkel w31 auf der Andruckrolle 31 ist in zweierlei Hinsicht hilfreich. Einerseits wird mit einem größeren Transportwinkel w31 die permanente Verbindung zum Zielsubstrat besser (u.a. durch mehr Zeit zum Ausbilden der Klebeverbindung und mehr Platz für Gegendruckrollen). Andererseits kann der Kleber vorteilhaft bereits vor einem Kontakt mit dem Zielsubstrat aktiviert werden, sobald das Transferelement auf der Andruckrolle 31 angeordnet ist. Der Anteil des Transportwinkels w31 bis zu einem Kontakt des Transferelementes mit dem Zielsubstrat liegt vorzugsweise zwischen 30 und 90 Grad oder 45 und 60 Grad.

Mit Figur 6 werden einige denkbare Alternativen zu Teilaspekten der bevorzugten Lösung aus Figur 1 illustriert. Die Figur zeigt nur den veränderten Ausschnitt der Transfervorrichtung.

Wie bereits beschrieben und nun in der Figur 6 angedeutet, wird der Radius der Andruckrolle 31 wesentlich größer sein als die Radien von Rollen einer Zwischentransporteinheit 220. Als Ablöse-Einheit wird zudem nun eine Ablöse-Rolle 110 verwendet, deren Radius vergleichbar sein kann mit (oder kleiner sein kann als ein) einem, ggf. ersten, Radius einer Rolle einer Zwischentransport-Einheit 220.

Der erkennbar größte Unterschied zu Fig. 1 liegt in der Ausgestaltung der Zwischentransport-Einheit 220.

Die Zwischentransport-Einheit 220 umfasst vier gleichartige (erste) Zwischentransport-Rollen 221 bis 224, die in der gleichen Richtung drehen. Die (Dreh-)Geschwindigkeit der Zwischentransport-Rollen 221 bis 224 ist einzeln steuerbar. Zudem sind die Zwischentransport-Rollen 221 bis 224 - in der Art eines Rollenkarussells - in ihrer Position änderbar (siehe fett dargestellter Drehrichtungspfeil). In der Figur sind die Rollen in folgenden Positionen dargestellt. Eine Zwischentransport-Rolle 221 ist an der Ablöse-Einheit positioniert und bewegt sich mit der Geschwindigkeit v1 des Transfersubstrates 5. Die Zwischentransport-Rolle 221 übernimmt ein Transferelement, ohne dass das Transferelement 9 in dem Schritt beschleunigt wird. Auf der Zwischentransport-Rolle 222 ist zumindest ein Transferelement 9 angeordnet, welches nun auf der Zwischentransport-Rolle 222 von der Geschwindigkeit v1 auf die Geschwindigkeit v2 beschleunigt wird (+Δv = v2 - v1). Die Zwischentransport-Rolle 223 bewegt sich (stets an ihrem Außenumfang) mit der Geschwindigkeit v2 des Zielsubstrates bzw. der Andruckrolle 31 und übergibt das Transferelement 9 an die Andruckrolle 31. In einer vierten Position wird die Drehung der Zwischentransport-Rolle 224, welche kein Transferelement mehr trägt, wieder auf die Geschwindigkeit des Transfersubstrates 5 reduziert (-Δv = v1 - v2). Die vier Zwischentransport-Rollen 221 -224 tauschen ihre Positionen, wie durch den Richtungspfeil angedeutet, nach einem Arbeitszyklus (Übernehmen, Beschleunigen, Übergeben, Abbremsen) gegen den Uhrzeigersinn. Nach vier Arbeitszyklen, in welchen 4*n Transferelemente auf die Andruckrolle 31 transportiert wurden (n=1 bis 4), erreichen die Zwischentransport-Rollen 221-224 wieder die dargestellte Position. Die Geschwindigkeits- und Abstandsänderung der Transferelemente kann also auch in der Zwischentransport-Einheit 20, 220 nach dem Schritt des (ersten) temporären Übertragens erfolgen.

Fig. 7 zeigt eine Transfervorrichtung 700, die nicht entsprechend der vorliegenden Erfindung ausgestaltet ist.

Die Transfervorrichtung 700 kann als eine Verbesserung einer Transfervorrichtung gemäß WO 2016/188624 A1 betrachtet werden. Optische Sicherheitselemente werden auf einem Transfersubstrat bereitgestellt. Im Stand der Technik umfassen die Sicherheitselemente auf der vom Transfersubstrat abgewandten Oberfläche eine Heißsiegelschicht, welche von der Ablöse-Einheit erhitzt und zum permanenten Verbinden des Sicherheitselements mit dem Zielsubstrat verwendet wird. Die Aktivierungstemperatur der Heißsiegelschicht ist insofern ein wichtiger Parameter der bekannten Lösung.

Es ist ein Grundgedanke der verbesserten Transfervorrichtung, eine Haftschicht, welche mit dem Zielsubstrat in Kontakt kommt, erst in der Transfervorrichtung, insbesondere im Bereich der Ablöse-Einheit, auf die Sicherheitselemente, die auf dem Transferband angeordnet sind, aufzubringen.

Die Transfervorrichtung 700 ist eingerichtet, um optische Sicherheitselemente 709 (als Transferelemente) von einem Transfersubstrat 701 auf ein Zielsubstrat 706 zu übertragen. Sie umfasst eine Ablöse-Einheit 710, eine Übernahme-Einheit 730 und eine Aufbringeinheit 707. Die Ablöse-Einheit 710 und die Übernahme-Einheit 730 sind so angeordnet, dass sie einen Übergabespalt ausbilden. Die Transfervorrichtung 700 bewegt das Transfersubstrat 701 mit den optischen Sicherheitselementen 709 und das Zielsubstrat 706 in den Übergabespalt. Ein optisches Sicherheitselemente 709 im Übergabespalt wird durch die Ablöse-Einheit 710 vom Transfersubstrat abgelöst und auf das Zielsubstrat 706 übergeben. Die Aufbringeinheit 707 bringt erst in der Transfervorrichtung 700 eine Haftschicht 708 auf die - auf dem Transfersubstrat 705 angeordneten - optischen Sicherheitselemente 709 auf.

Nachdem das Grundprinzip der Transfervorrichtung 700 beschrieben ist, werden im Folgenden besonders vorteilhafte Aspekte der Transfervorrichtung und deren konkrete Ausgestaltung in der Figur 7 beschrieben. Die Aspekte sind jeweils miteinander kombinierbar.

Gemäß einem ersten Aspekt ist die Haftschicht 708 eingerichtet, um zumindest im Übergabespalt eine haftende Verbindung des optischen Sicherheitselements 709 mit dem Zielsubstrat 706 herzustellen. Die Haftschicht 708 kommt im Übergabespalt - unmittelbar vor oder bei dem Ablösen - mit dem Zielsubstrat 706 in Kontakt. Die Haftschicht 708 ist für sich genommen (oder gemeinsam mit einer weiteren Teilhaftschicht des Sicherheitselements bzw. des Zielsubstrats) zum permanenten Verbinden des Sicherheitselements mit dem Zielsubstrat vorgesehen.

Gemäß einem zweiten Aspekt wird die Haftschicht 708 von der Aufbringeinheit 707 selektiv nur auf die optischen Sicherheitselements 709 aufgebracht. Es wird somit nicht nur Haftschicht-Material eingespart, sondern auch eine Verwertung, wie erneute Nutzung, des Transfersubstrates erleichtert. Die Aufbringeinheit 707 kann die Haftschicht entweder kontaktfrei, beispielsweise mittels Sprühen oder Inkjet-Verfahren, oder kontaktierend, beispielsweise Flexodruck-, Tiefdruck- oder KissPrint-Verfahren, selektiv aufbringen.

Gemäß einem dritten Aspekt wird die Haftschicht 708 durch einen vernetzenden Kleber, einen härtbaren Kleber oder einen Mehrkomponentenkleber gebildet. Insbesondere kann am Übergabespalt (oder in Transportrichtung dahinter) eine in Figur 7 nicht dargestellte Aushärtungseinheit, wie UV- und/oder IR-Quelle, vorgesehen werden. Die Haftschicht 708 weist vorzugsweise eine hohe Heißwasserbeständigkeit auf. Gemäß einem vierten Aspekt bildet die (erst spät aufgebrachte) Haftschicht 708 eine erste Komponente eines Klebersystems, wobei eine (äußere) Teilschicht des optischen Sicherheitselements 709 die zweite Komponente umfasst.

Gemäß einem fünften Aspekt ist die Aufbringeinheit 707 im Bereich der Ablöse-Einheit 710 angeordnet, also insbesondere kurz vor den Übergabespalt. Die möglichen Anforderungen an eine Haftschicht 708, wie Empfindlichkeit gegenüber Sauerstoff und/oder Licht, können somit gering gehalten werden.

Die Transportvorrichtung kann nach einem sechsten Aspekt weiterhin eine Andruckrolle 733 umfassen, die insbesondere an einer Übernahmerolle 730 oder an einer Gegendruckrolle 734 angeordnet sein kann. Nach einem siebten Aspekt wird das Zielsubstrat 706 mit Hilfe einer Umlenkrolle 739 an der Aufbringeinheit 707 vorbei in den Übergabespalt geführt.

Gemäß einem achten Aspekt wird das Zielsubstrat 706 mit einer ersten Geschwindigkeit v2 in die Transfer-Vorrichtung 700 transportiert, welche größer ist als eine Grundgeschwindigkeit v0, mit welcher das Transfersubstrat mit Sicherheitselementen 701 in die Transfer-Vorrichtung 700 transportiert wird.

Gemäß einem neunten Aspekt umfasst die Transportvorrichtung 700 einen (bzw. zwei) Zwischenspeicher 711 (711,712) für das Transfersubstrat 705. Dieser wird (bzw. diese werden) insbesondere verwendet, um eine Geschwindigkeit v1 des Transfersubstrats an der Ablöse-Einheit unabhängig von einer Grundgeschwindigkeit v0 des Transfersubstrates steuern zu können. Die Zwischenspeicher 711, 712 sind in der Figur als Schlaufen dargestellt, welche eine flexible Länge an Transfersubstrat aufnehmen können, und für sich genommen in dieser Form (mit masselosen Tänzern) oder anderer Form bekannt.

Gemäß einem zehnten Aspekt wird eine Geschwindigkeit v1 des Transfersubstrats - im Bereich der Aufbring-Einheit 707 (bzw. der Ablöse-Einheit 710)- zeitabhängig gesteuert v1(t). Insbesondere kann somit beim Aufbringen der Haftschicht 708 die Geschwindigkeit einen Minimalwert haben, sogar kleiner als eine Grundgeschwindigkeit v0 sein, und/oder beim Ablösen des optischen Sicherheitselements 709 vom Transfersubstrat 705 einen Maximalwert haben, der beispielsweise größer als die Grundgeschwindigkeit v0 ist.

Die Transfervorrichtung 700 ist für optische Sicherheitselemente, vorzugsweise optisch variable Sicherheitselemente bestimmt, wie sie bereits zuvor thematisiert wurden und insbesondere mit Bezug auf Figur 4 näher beschrieben sind.

Wie in Fig. 7 dargestellt kann die Übergabe-Einheit 710 als Übergabe-Keil ausgebildet sein und die Übernahme-Einheit 730 als Übernahme-Rolle.

### Bezugszeichenliste

- 1: Transfersubstrat mit Transferelementen
- 2: Zielsubstrat mit Transferelementen
- 5: Transfersubstrat
- 6: Zielsubstrat
- 9: Transferelement

- v1: Geschwindigkeit des Transfersubstrats
- d1: Transferelementabstand auf Transfersubstrat
- v2: Geschwindigkeit des Zielsubstrats
- d2: Transferelementabstand auf Zielsubstrat

- 10: Ablöse-Einheit
- 20: Zwischentransporteinheit
- 22: Erste Zwischentransportrolle
- 23: Zweite Zwischentransportrolle
- 27, 28: Reinigungseinheit
- 30: Verbindungs-Einheit
- 31: Andruckrolle
- 32: Heizeinheit
- 36 - 39: Gegendruck-Rollen

- 51, 53: Transfersubstrat-Teilschichten
- 52: Kaschierschicht
- 91: Ablöseschicht
- 92: Zwischenhaftschicht
- 93: Folienteilschicht
- 94: Prägelack
- 95: Metallisierung
- 96: Lackschicht
- 97: Heißsiegellack
- 98: Zwischenhaftschicht

- w22: Transportwinkel auf erster Zwischenrolle
- w23: Transportwinkel auf zweiter Zwischenrolle
- w31: Transportwinkel auf Andruckrolle

- 110: Ablöserolle
- 220: Zwischenrollen-Karussell
- 221 - 224: Erste Zwischenrollen

- 701: Transfersubstrat mit Transferelementen
- 702: Zielsubstrat mit Transferelementen
- 705: Transfersubstrat
- 706: Zielsubstrat
- 707: Kleber-Aufbringeinheit
- 708: Kleberschicht
- 709: Transferelement
- 710: Ablöse-Einheit
- 711, 712: Zwischenspeicher
- 730: Übernahmerolle
- 733: Andruckrolle
- 734: Gegendruckrolle
- 739: Umlenkrolle

## Patentansprüche

1. Verfahren in einer Transfervorrichtung für optische Sicherheitselemente, mit
- Bereitstellen einer Vielzahl von Transferelementen (9) auf einem Transfersubstrat (5),
wobei die Transferelemente (9) mit einem ersten Abstand (d1) hintereinander auf dem Transfersubstrat (5) angeordnet sind;
- Ablösen eines Transferelementes (9) von dem Transfersubstrat (5);
- temporäres Übertragen des von dem Transfersubstrat (5) gelösten Transferelementes (1) auf einen Transportträger (20) der Transfervorrichtung (10,20,30), und
- Bewegen eines Zielsubstrates (6) mit einer Geschwindigkeit (v2);
- Transportieren des Transferelementes (9) auf dem Transportträger (20) mit der Geschwindigkeit des Zielsubstrates (6) bereits vor einem Kontakt mit dem Zielsubstrat (6).
- permanentes Verbinden des Transferelementes (9) mit dem bewegten Zielsubstrat (6);
**dadurch gekennzeichnet, dass**
die Transferelemente (9) optisch variable Sicherheitselemente sind, welche für den Betrachter einen optisch variablen Effekt zeigen;
ein Kleber, welcher die permanente Verbindung herstellt, auf der vom Transfersubstrat abgewandten Seite des Transferelementes angeordnet ist,
der Kleber, welcher die permanente Verbindung herstellt, erwärmt wird, und
auf dem Zielsubstrat (6) die Transferelemente (9) mit einem zweiten Abstand (d2), der größer als der erste Abstand (d1) ist, angeordnet werden.

2. Verfahren nach Anspruch 1, **dadurch gekennzeichnet, dass** die Änderung des Abstandes und/oder einer Geschwindigkeit des gelösten Transferelementes (9) in dem Schritt des temporären Übertragens oder in dem Schritt des Transportierens erfolgt.

3. Verfahren nach Anspruch 1 oder 2, **dadurch gekennzeichnet, dass** das Transferelement (9) durch Ändern der lokalen Bewegungsrichtung des Transfersubstrates (5) von dem Transfersubstrat (5) gelöst wird.

4. Verfahren nach einem der Ansprüche 1 bis 3, **dadurch gekennzeichnet, dass** das Transferelement (9) beim permanenten Verbinden auf einer Andruckrolle (31) angeordnet ist, und/oder
das Transferelement (9) beim temporären Übertragen auf die Andruckrolle (31) als der Transportträger (20) der Transfervorrichtung (10,20,30) übertragen wird.

5. Verfahren nach einem der Ansprüche 1 bis 4, **dadurch gekennzeichnet, dass** das Transferelement (9) zum Zeitpunkt des Kontaktes mit dem Zielsubstrat (6) quasiparallel zum Zielsubstrat bewegt wird, insbesondere indem der Radius (r31) der Andruckrolle (31) größer ist als die fünffache, vorzugsweise zehnfache, Größe des Transferelementes.

6. Verfahren nach einem der Ansprüche 1 bis 5, **dadurch gekennzeichnet, dass** nach dem temporären Übertragen auf den Transportträger (20; 22) ein zweites temporäres Übertragen des Transferelementes (9) erfolgt, insbesondere - nach dem ersten temporären Übertragen auf einen ersten Teil des Transportträgers (22) - von dem ersten Teil des Transportträgers (22) auf einen weiteren Teil des Transportträgers (23) oder auf eine Andruckrolle (31).

7. Verfahren nach Anspruch 6, **dadurch gekennzeichnet, dass** beim zweiten temporären Übertragen das Transferelement von einer ersten Transportrolle (22) des Transportträgers mit einem erstem Radius auf eine zweite Transportrolle (23) des Transportträgers oder die Andruckrolle (31) mit einem größeren Radius übergeben wird.

8. Verfahren nach einem der Ansprüche 1 bis 7, **dadurch gekennzeichnet, dass** das Transferelement auf einer Transportrolle (22,23) des Transportträgers über einen Transportwinkel (w22, w23) von weniger als 150 Grad, insbesondere weniger als 120 Grad, weiter vorzugsweise weniger als 90 Grad, transportiert wird.

9. Verfahren nach einem der Ansprüche 1 bis 8, **dadurch gekennzeichnet, dass** das Transferelement auf einer Andruckrolle (31) über einen Transportwinkel (w31) von mehr als 90 Grad, vorzugsweise mehr als 135 Grad, weiter vorzugsweise mehr als 180 Grad angeordnet ist.

10. Verfahren nach einem der Ansprüche 1 bis 9, **dadurch gekennzeichnet, dass** das Transferelement (9) vor einem Kontakt mit dem Zielsubstrat (6) auf einer Andruckrolle (31) über einen Transportwinkel (w31) von mehr als 30 Grad, vorzugsweise mehr als 45 Grad, angeordnet ist, und insbesondere nach dem Kontakt mit dem Zielsubstrat (6) über einen Transportwinkel von mehr als 90 Grad, vorzugsweise mehr als 135 Grad, angeordnet bleibt.

11. Verfahren nach einem der Ansprüche 1 bis 10, **dadurch gekennzeichnet, dass** eine Transportrolle (22,23) der Transportvorrichtung in seiner Geschwindigkeit gesteuert wird, insbesondere um die Geschwindigkeit des Zielsubstrates zu erreichen und/oder um eine Verbindungsposition zu korrigieren.

## Claims

1. Method in a transfer device for optical security elements, with the steps of:
- providing a plurality of transfer elements (9) on a transfer substrate (5),
the transfer elements (9) being arranged one behind the other on the transfer substrate (5) with a first spacing (d1);
- detaching a transfer element (9) from the transfer substrate (5);
- temporarily transferring the transfer element (1) detached from the transfer substrate (5) to a transport carrier (20) of the transfer device (10, 20, 30), and
- moving a target substrate (6) at a speed (v2);
- transporting the transfer element (9) on the transport carrier (20) at the speed of the target substrate (6) already before contact with the target substrate (6);
- permanently connecting the transfer element (9) to the moving target substrate (6);
**characterized in that**
the transfer elements (9) are optically variable security elements that exhibit an optically variable effect for the viewer;
an adhesive which establishes the permanent connection is arranged on the side of the transfer element facing away from the transfer substrate,
the adhesive which establishes the permanent connection is heated, and
the transfer elements (9) are arranged on the target substrate (6) with a second spacing (d2), which is greater than the first spacing (d1).

2. Method according to Claim 1, **characterized in that** the spacing and/or a speed of the detached transfer element (9) is changed in the temporary transfer step or in the transport step.

3. Method according to Claim 1 or 2, **characterized in that** the transfer element (9) is detached from the transfer substrate (5) as a result of a change in the local direction of movement of the transfer substrate (5).

4. Method according to any of Claims 1 to 3, **characterized in that** the transfer element (9) is arranged on a pressure roller (31) when establishing the permanent connection, and/or
during the temporary transfer to the pressure roller (31), the transfer element (9) is transferred as the transport carrier (20) of the transfer device (10, 20, 30).

5. Method according to any of Claims 1 to 4, **characterized in that** the transfer element (9) is moved quasi-parallel to the target substrate at the time of contact with the target substrate (6), in particular by virtue of the radius (r31) of the pressure roller (31) being greater than the five times the size, preferably ten times the size, of the transfer element.

6. Method according to any of Claims 1 to 5, **characterized in that** following the temporary transfer to the transport carrier (20; 22), there is a second temporary transfer of the transfer element (9), in particular - following the first temporary transfer to a first part of the transport carrier (22) - from the first part of the transport carrier (22) to another part of the transport carrier (23) or to a pressure roller (31).

7. Method according to Claim 6, **characterized in that** during the second temporary transfer, the transfer element is passed from a first transport roller (22) of the transport carrier with a first radius to a second transport roller (23) of the transport carrier or to the pressure roller (31) with a larger radius.

8. Method according to any of Claims 1 to 7, **characterized in that** the transfer element is transported on a transport roller (22, 23) of the transport carrier over a transport angle (w22, w23) of less than 150 degrees, in particular less than 120 degrees, further preferably less than 90 degrees.

9. Method according to any of Claims 1 to 8, **characterized in that** the transfer element is arranged on a pressure roller (31) over a transport angle (w31) of more than 90 degrees, preferably more than 135 degrees, further preferably more than 180 degrees.

10. Method according to any of Claims 1 to 9, **characterized in that** the transfer element (9) is arranged on a pressure roller (31) over a transport angle (w31) of more than 30 degrees, preferably more than 45 degrees, before contact with the target substrate (6) and, in particular after contact with the target substrate (6), remains arranged over a transport angle of more than 90 degrees, preferably more than 135 degrees.

11. Method according to any of Claims 1 to 10, **characterized in that** a transport roller (22, 23) of the transport device is controlled in terms of its speed, in particular in order to reach the speed of the target substrate and/or correct a connection position.

## Revendications

1. Procédé dans un dispositif de transfert pour des éléments de sécurité optiques, comprenant
- fourniture d'une multitude d'éléments de transfert (9) sur un substrat de transfert (5),
les éléments de transfert (9) étant disposés les uns derrière les autres sur le substrat de transfert (5) à une première distance (d1) ;
- détachement d'un élément de transfert (9) du substrat de transfert (5) ;
- transfert temporaire de l'élément de transfert (1) détaché du substrat de transfert (5) sur un support de transport (20) du dispositif de transfert (10, 20, 30), et
- déplacement d'un substrat cible (6) à une vitesse (v2) ;
- transport de l'élément de transfert (9) sur le support de transport (20) à la vitesse du substrat cible (6) déjà avant un contact avec le substrat cible (6),
- liaison permanente de l'élément de transfert (9) avec le substrat cible (6) mobile ;
**caractérisé en ce que**
les éléments de transfert (9) sont des éléments de sécurité optiquement variables qui présentent un effet optiquement variable pour l'observateur ;
un adhésif, qui réalise la liaison permanente, est disposé sur le côté de l'élément de transfert opposé au substrat de transfert,
l'adhésif qui réalise la liaison permanente est chauffé, et
les éléments de transfert (9) sont disposés sur le substrat cible (6) à une deuxième distance (d2), qui est supérieure à la première distance (d1).

2. Procédé selon la revendication 1, **caractérisé en ce que** la modification de la distance et/ou d'une vitesse de l'élément de transfert (9) détaché s'effectue dans l'étape de transfert temporaire ou dans l'étape de transport.

3. Procédé selon la revendication 1 ou 2, **caractérisé en ce que** l'élément de transfert (9) est détaché du substrat de transfert (5) par modification de la direction de déplacement locale du substrat de transfert (5).

4. Procédé selon l'une des revendications 1 à 3, **caractérisé en ce que** l'élément de transfert (9) est disposé sur un rouleau presseur (31) lors de la liaison permanente, et/ou
l'élément de transfert (9), lors du transfert temporaire, est transféré sur le rouleau presseur (31) en tant que support de transport (20) du dispositif de transfert (10, 20, 30).

5. Procédé selon l'une des revendications 1 à 4, **caractérisé en ce que** l'élément de transfert (9), au moment du contact avec le substrat cible (6), est déplacé de manière quasi parallèle au substrat cible, notamment en faisant en sorte que le rayon (r31) du rouleau presseur (31) soit supérieur à cinq fois, de préférence dix fois, la taille de l'élément de transfert.

6. Procédé selon l'une des revendications 1 à 5, **caractérisé en ce qu'**après le transfert temporaire sur le support de transport (20 ; 22), un deuxième transfert temporaire de l'élément de transfert (9) a lieu, notamment - après le premier transfert temporaire sur une première partie du support de transport (22) - de la première partie du support de transport (22) sur une partie supplémentaire du support de transport (23) ou sur un rouleau presseur (31).

7. Procédé selon la revendication 6, **caractérisé en ce que**, lors du deuxième transfert temporaire, l'élément de transfert est transféré d'un premier rouleau de transport (22) du support de transport ayant un premier rayon vers un deuxième rouleau de transport (23) du support de transport ou vers le rouleau pressage (31) ayant un rayon plus grand.

8. Procédé selon l'une des revendications 1 à 7, **caractérisé en ce que** l'élément de transfert est transporté sur un rouleau de transport (22, 23) du support de transport selon un angle de transport (w22, w23) inférieur à 150 degrés, en particulier inférieur à 120 degrés, encore de préférence inférieur à 90 degrés.

9. Procédé selon l'une des revendications 1 à 8, **caractérisé en ce que** l'élément de transfert est disposé sur un rouleau presseur (31) selon un angle de transport (w31) supérieur à 90 degrés, de préférence supérieur à 135 degrés, encore de préférence supérieur à 180 degrés.

10. Procédé selon l'une des revendications 1 à 9, **caractérisé en ce que** l'élément de transfert (9) est disposé, avant un contact avec le substrat cible (6), sur un rouleau presseur (31) selon un angle de transport (w31) supérieur à 30 degrés, de préférence supérieur à 45 degrés, et reste disposé, notamment après le contact avec le substrat cible (6), selon un angle de transport supérieur à 90 degrés, de préférence supérieur à 135 degrés.

11. Procédé selon l'une des revendications 1 à 10, **caractérisé en ce que** la vitesse d'un rouleau de transport (22, 23) du dispositif de transport est commandée, notamment pour atteindre la vitesse du substrat cible et/ou pour corriger une position de liaison.
